# FASCICULE DE BREVET EUROPEEN

(11) **EP 4 172 470 B1**
(45) Date de publication et mention de la délivrance du brevet: **06.08.2025**
(21) Numéro de dépôt: 21742460.5
(22) Date de dépôt: 29.06.2021
(51) Int. Cl.: F01D 25/24

(54) **CARTER POUR UNE TURBOMACHINE D'AÉRONEF**
GEHÄUSE FÜR EINE FLUGZEUG-TURBOMASCHINE
CASING FOR AN AIRCRAFT TURBOMACHINE

(30) Priorité: 29.06.2020 FR 2006781
(43) Date de publication de la demande: 03.05.2023
(73) Titulaire: SAFRAN AIRCRAFT ENGINES, 75015 Paris (FR)
(72) Inventeur: BOUROLLEAU, Clément, 77550 MOISSY-CRAMAYEL (FR); ARNOLD, Clémentine, 77550 MOISSY-CRAMAYEL (FR); BRANCO, Alexandre, 77550 MOISSY-CRAMAYEL (FR); DOMINGUES, Serge, 77550 MOISSY-CRAMAYEL (FR); DUPAYS, Thomas, 77550 MOISSY-CRAMAYEL (FR); FIORE, Vincent Pascal, 77550 MOISSY-CRAMAYEL (FR); LEBLON, Baptiste, 77550 MOISSY-CRAMAYEL (FR); SIRAJ, Anwer, 77550 MOISSY-CRAMAYEL (FR)
(74) Mandataire: Gevers & Orès
(86) Numéro de dépôt international: PCT/FR2021/051195
(87) Numéro de publication internationale: WO 2022/003291

(56) Documents cités:
- EP-A1- 1 589 195
- EP-A1- 3 093 450
- EP-A1- 3 192 979
- EP-A2- 2 623 725
- WO-A1-2020/011617
- US-A1- 2018 230 855
- US-A1- 2019 136 871

## Description

### Domaine technique de l'invention

La présente invention concerne un carter, en particulier de soufflante de turbomachine d'aéronef, et une turbomachine d'aéronef.

### Arrière-plan technique

L'arrière-plan technique comprend notamment les documents EP-A1-3192979, WO-A1-2020/011617 et EP-A1-3093450.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

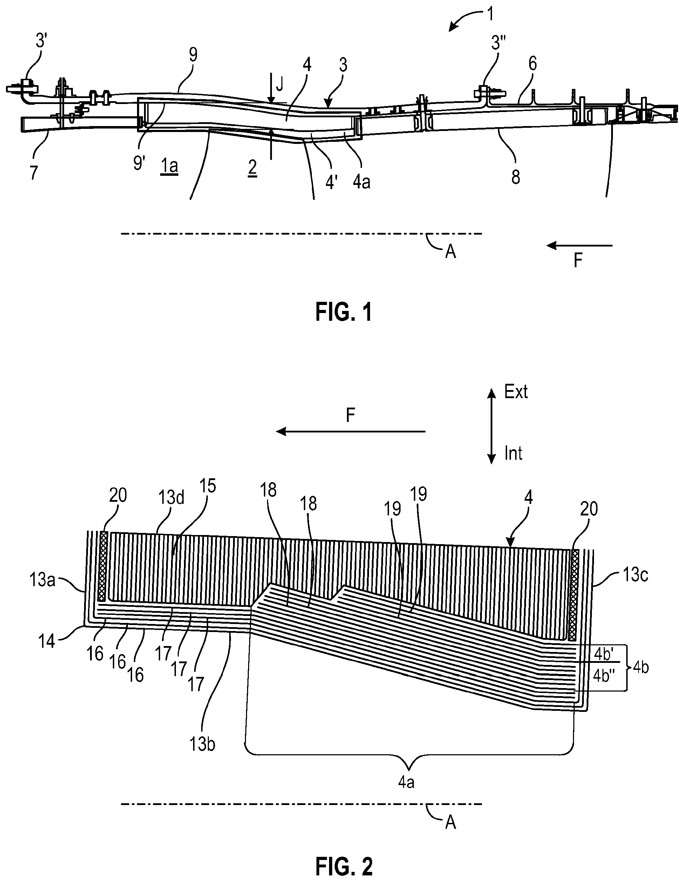

La figure 1 représente partiellement et schématiquement une soufflante 1 d'une turbomachine d'aéronef.

La soufflante 1 comporte une roue à aubes 2 qui est entourée par un carter 3 de soufflante, encore appelé carter de rétention du fait de sa fonction de rétention en cas d'ingestion de débris dans la soufflante ou de perte d'aube.

Le carter de soufflante 3 comprend typiquement une enveloppe annulaire 9 d'axe de révolution A qui s'étend autour des aubes de soufflante 2 de la turbomachine. Cette enveloppe comprend une bride annulaire de fixation 3', 3" à chacune de ses extrémités axiales. Ces brides 3', 3" sont utilisées pour fixer le carter 3 à des parois annulaires de la nacelle de la turbomachine.

Le carter de soufflante 3 est lié, à l'amont, à une manche d'entrée d'air non illustrée, et, à l'aval, à une virole 6 de carter intermédiaire.

Le carter comporte également une virole acoustique amont 7 et un panneau acoustique aval 8. Le carter de soufflante 3 comporte encore une couche annulaire 4 dite cartouche support abradable, disposée sur une surface annulaire interne 9' de l'enveloppe 9, entre la virole amont 7 et le panneau aval 8. La cartouche support abradable 4 porte une couche annulaire 4' de matière abradable, cette dernière formant, conjointement avec la virole 7 et le panneau aval 8, le profil de la veine aérodynamique 1a de la turbomachine 1.

La cartouche support abradable 4 a pour fonction principale de supporter la couche de matériau abradable 4' et de combler le jeu J (figure 1) prévu entre le corps 9b de l'enveloppe 9 et les aubes 2 pour éviter leur contact direct en cas d'évènement dépassant le fonctionnement normal, un tel contact pouvant amener à un phénomène de résonance catastrophique.

Les fonctions de la cartouche support abradable 4 sont de deux types :
- mécanique, d'une part :
   - supporter la couche de matériau abradable 4',
   - combler le jeu J précité,
   - résister au champ de pressions pouvant s'exercer dans la veine de la turbomachine 1 lors de son fonctionnement,
   - résister à l'ingestion de glace,
   - permettre l'évacuation des fumées en cas de feu dans le compartiment de la nacelle ;
- aérodynamique, d'autre part, afin de garantir le profil de la veine.

La figure 2 montre une cartouche support abradable 4. Cette cartouche support abradable 4 comporte un cœur en NIDA 15 (c'est-à-dire en matériau à structure en nid d'abeilles), un revêtement en fibres de carbone 14 et des couches en matériau intumescent 20, ou couches de densification. Les couches de densification 20 sont disposées aux extrémités amont et aval du cœur en NIDA 15. Le revêtement en fibres de carbone 14 est structuré de manière à envelopper les couches de densification 20 et le cœur en NIDA 15 sur trois côtés 13a, 13b et 13c. Un quatrième côté 13d, à savoir la surface radiale extérieure du cœur 15, est destiné à être collé sur la surface interne 9' de l'enveloppe 9 et est exempt du revêtement en fibres de carbone 14.

Dans le détail, le revêtement en fibres de carbone 14 comporte ici quatre épaisseurs de plis en fibres de carbone 16, 17, 18 et 19. La première épaisseur de plis 16 est celle qui enveloppe les couches de densification 20 et le cœur en NIDA 15 sur trois côtés 13a, 13b et 13c, à proprement parler. Ces plis 16 forment donc d'une part la surface extérieure de la veine 1a du côté intérieur 13b de la cartouche support abradable 4, et d'autre part le revêtement sur les côtés amont 13a et aval 13c de la cartouche 4. Les plis 17 de la deuxième épaisseur, plus courts que les plis 16 de la première épaisseur, s'étendent ici exclusivement longitudinalement, intérieurement au cœur 15 et aux couches 20. Les troisième et quatrième épaisseurs de plis 18 et 19 sont interposées entre les plis 17 d'une part, et le cœur 15 et la couche aval 20 d'autre part. Les plis 18 et 19 forment une zone de renfort 4b en partie aval 4a, augmentant ainsi l'épaisseur locale de la cartouche support abradable 4, donc l'inertie mécanique, c'est-à-dire le moment quadratique, et la raideur de la cartouche 4. En détail, Les plis 19 sont de longueur axiale inférieure aux plis 18, et forment chacun une surépaisseur locale 4b" et 4b' respective (figure 2). On note que la partie aval 4a correspond à un rétrécissement du diamètre interne de la cartouche 4.

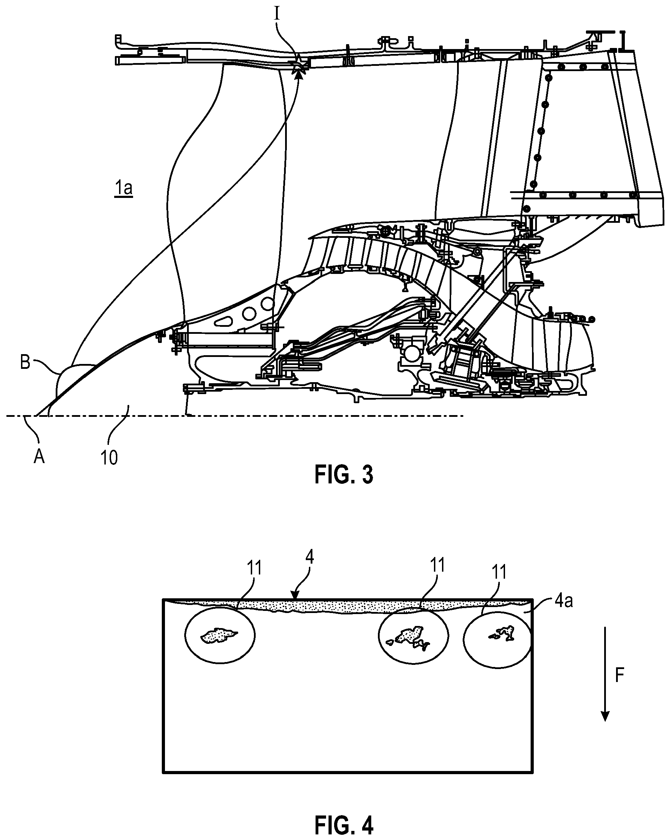

La figure 3 montre également partiellement une coupe de soufflante d'une turbomachine d'aéronef 1 selon l'état de la technique, montrant le trajet que peut suivre un bloc de glace B entre un cône avant 10, au centre de la turbomachine 1 et aligné sur l'axe longitudinal A, et une partie aval 4a de la cartouche support abradable 4. La génération d'un tel bloc de glace B de glace peut être réalisée en conditions givrantes en laboratoire pour reproduire les conditions de formation de glace à l'altitude de croisière de l'aéronef : la turbomachine 1 est entraînée pour tourner à la vitesse maximum dans un nuage à faible température et forte humidité. De la glace se forme sur le cône 10 par accrétion. A partir d'une épaisseur critique de glace, un morceau significatif, tel que le bloc de glace B, se détache et est expulsé à forte vitesse dans la veine 1a. Le bloc de glace B franchit alors les aubes 2 du rotor et vient heurter la partie aval 4a de la cartouche support abradable 4, par exemple en un point I (figure 3). Il en résulte une perte parfois totale de la couche de matériau abradable 4' et un endommagement des tissus en fibres de carbone de la cartouche support abradable 4. La figure 4 illustre la partie aval 4a de la cartouche support abradable 4 après un tel essai de reproduction de conditions givrantes. On observe alors l'apparition de cratères 40 dans la structure en fibres de carbone.

A l'heure actuelle, le remplacement d'une cartouche support abradable 4 présentant de tels dégâts sur les moteurs déjà en service, c'est-à-dire montés sur un aéronef, n'est pas possible.

Si la cartouche support abradable 4 devait subir des dégâts en phase de fabrication, la remplacer serait possible mais difficile et coûteux puisqu'elle est collée sur l'enveloppe 9. Il serait ainsi nécessaire de la décoller en faisant attention de ne pas abîmer l'enveloppe 3. Une nouvelle cartouche support abradable 4 pourrait alors être posée, ce qui exigerait la réalisation d'un cycle de cuisson en autoclave. Un tel remplacement est donc coûteux, délicat et long, et n'est donc pas souhaitable.

L'invention vise donc à proposer un carter de turbomachine d'aéronef dont la cartouche support abradable présente une durée de vie améliorée, notamment dans l'éventualité d'impacts de glace.

### Résumé de l'invention

L'invention concerne ainsi un carter de turbomachine d'aéronef, comportant une enveloppe annulaire s'étendant autour d'un axe longitudinal et présentant une surface annulaire interne, le carter comportant également une cartouche support abradable annulaire qui est fixée contre ladite surface annulaire interne, la cartouche support abradable présente un revêtement renforcé comportant un renfort en texture fibreuse noyé dans une matrice en résine, le renfort en texture fibreuse comportant une superposition de plis en texture fibreuse, dans lequel la superposition de plis comporte au moins un pli en Kevlar^{®} ou en fibres de verre, et dans lequel des plis de ladite superposition de plis en texture fibreuse forment une zone de renfort en une partie aval de la cartouche support abradable.

Ainsi, selon l'invention, la tenue mécanique de la cartouche support abradable à l'impact est améliorée, notamment en cas d'impact de glace et d'aube de rotor. En prévoyant des tissus résistants à l'impact, les dégâts liés à de tels impacts sont également limités, voire supprimés.

Le carter selon l'invention peut comprendre une ou plusieurs des caractéristiques suivantes, considérées indépendamment les unes des autres ou en combinaison les unes avec les autres :
- lesdits plis de la zone de renfort forment une surépaisseur locale, en particulier en direction radiale ;
- l'au moins un pli en Kevlar^{®} ou en fibres de verre s'étend sur plus de la moitié de la longueur axiale de la cartouche support abradable ;
- l'au moins un pli en Kevlar^{®} ou en fibres de verre forme un revêtement radialement intérieur de la cartouche support abradable et/ou est configuré pour former une paroi extérieure d'une veine de la turbomachine ;
- l'au moins un pli en Kevlar^{®} ou en fibres de verre forme également une couche périphérique sur le côté amont et le côté aval de la cartouche support abradable ;
- l'au moins un pli en Kevlar^{®} ou en fibres de verre est une toile tissée de Kevlar^{®} ;
- ladite toile tissée de Kevlar^{®} est pré-imprégnée de résine ;
- une épaisseur de toile tissée mixte Kevlar^{®}-fibres de carbone est superposée radialement extérieurement à ladite toile tissée de Kevlar^{®} ;
- l'au moins un pli en Kevlar^{®} ou en fibres de verre est en fibres de verre, et une épaisseur de plis en fibres de carbone est superposée radialement extérieurement audit pli en fibres de verre ;
- l'au moins un pli en Kevlar^{®} ou en fibres de verre est pris en sandwich entre deux épaisseurs de plis en fibres de carbone ;
- la cartouche support abradable comporte un cœur à structure en nid d'abeilles ;
- une face dudit cœur est exempte de l'au moins un pli en Kevlar^{®} ou en fibres de verre ;

L'invention porte également sur une turbomachine d'aéronef comportant un carter selon une ou plusieurs des caractéristiques ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 déjà discutée montre partiellement une vue en coupe d'une soufflante d'une turbomachine d'aéronef selon l'état de la technique ;
[Fig.2] La figure 2 illustre une cartouche support abradable ;
[Fig.3] La figure 3 montre également partiellement une coupe de soufflante d'une turbomachine d'aéronef selon l'état de la technique, montrant le trajet que peut suivre un bloc de glace entre un cône avant, au centre de la turbomachine, et une partie aval d'une cartouche support abradable ;
[Fig.4] La figure 4 illustre de manière très schématique une partie aval d'une cartouche support abradable de la figure 3 ayant subi des tests en conditions givrantes ;
[Fig.5] La figure 5 illustre un premier mode de réalisation d'une cartouche support abradable selon l'invention ;
[Fig.6] La figure 6 illustre un deuxième mode de réalisation d'une cartouche support abradable selon l'invention ;
[Fig.7] La figure 7 illustre un troisième mode de réalisation d'une cartouche support abradable selon l'invention ;
[Fig.8] La figure 8 illustre un quatrième mode de réalisation d'une cartouche support abradable selon l'invention.

### Description détaillée de l'invention

Dans la description qui suit, l'invention est appliquée à un carter de soufflante tel que le carter 3 illustré partiellement en figure 1. L'invention n'est toutefois pas limitée à ce type de carter et peut être appliquée à un carter d'un autre type de turbomachine.

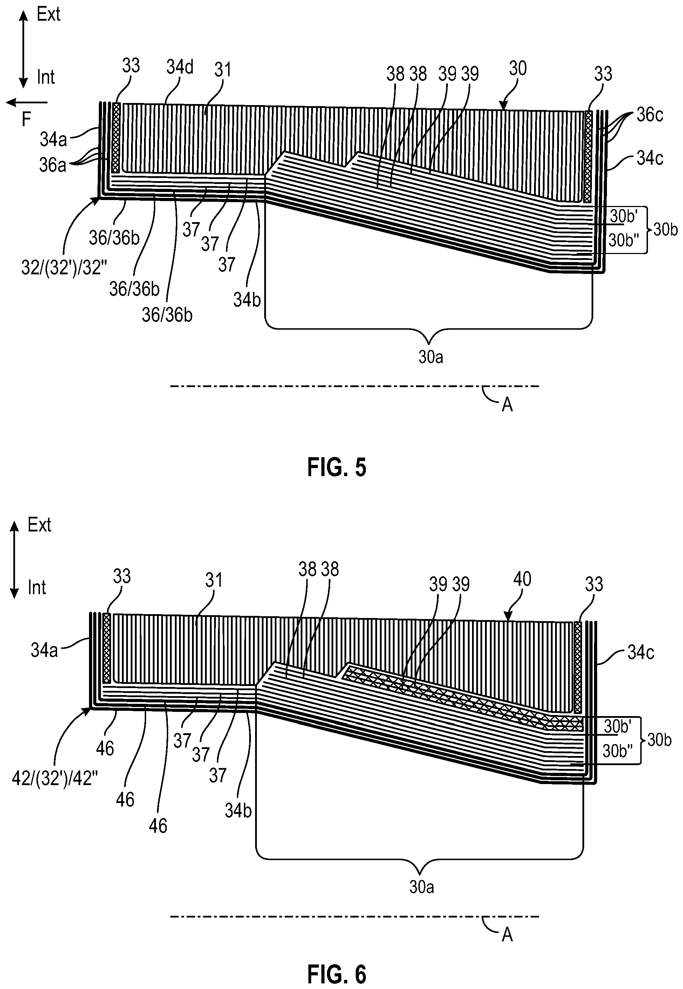

Le carter 3 auquel l'invention s'applique présente une forme générale annulaire autour de l'axe longitudinal A. Une flèche F matérialise un sens vers l'avant des éléments illustrés eu égard à leur orientation une fois installés dans la turbomachine. Une double-flèche Ext-Int en figures 5 à 8 matérialise une direction radiale et les sens vers l'intérieur et vers l'extérieur de la turbomachine 1 lorsque les cartouches support abradable 30, 40, 50 et 60 décrites ci-après sont orientées selon leur disposition sur un carter 3 de turbomachine 1 en service sur un aéronef.

Le carter 3 comporte une enveloppe annulaire 9 qui s'étend elle-même autour de l'axe A (figure 1).

Une cartouche support abradable annulaire, ou en secteurs d'anneau, telle que les cartouches support abradable 30, 40, 50 ou 60 décrites ci-après, est disposée sur une surface interne 9' de l'enveloppe annulaire 9.

Un premier mode de réalisation d'une cartouche support abradable 30 est illustré en figure 5. Des deuxième, troisième et quatrième modes de réalisation de cartouches support abradable 40, 50 et 60 respectivement sont illustrées en figures 6, 7 et 8 et seront décrites plus loin.

Dans le mode de réalisation de la figure 5, la cartouche support abradable 30 comporte un cœur en NIDA 31 (c'est-à-dire en matériau à structure en nid d'abeilles), un revêtement renforcé 32, en matériau composite, et des couches de densification 33. Les couches de densification 33 sont disposées aux extrémités amont et aval du cœur en NIDA 31, radialement. Le revêtement renforcé 32 est structuré de manière à envelopper le cœur en NIDA 31 et les couches de densification 33 sur trois côtés 34a, 34b et 34c. Un quatrième côté 34d, à savoir la surface radiale extérieure du cœur 31, est destiné à être collé sur la surface interne 9' de l'enveloppe 9 et est exempt du revêtement 32. Dans le détail, le revêtement 32 comporte un renfort en texture fibreuse 32", comportant une superposition de plis en texture fibreuse, noyé dans une matrice en résine 32'. Dans le mode de réalisation représenté, le renfort 32" comporte quatre épaisseurs de plis en texture fibreuse 36, 37, 38 et 39. La résine 32' est, de préférence mais non limitativement, une résine époxyde. Une résine époxyde imprégnera de préférence également le cœur en NIDA pour bénéficier de la meilleure compatibilité chimique possible. La première épaisseur de plis 36 est celle qui enveloppe le cœur en NIDA 31 et les couches de densification 33 sur trois côtés 34a, 34b et 34c, à proprement parler. Ces plis 36 forment donc, par leur partie médiane s'étendant longitudinalement 36b, la couche radialement intérieure de la cartouche support abradable 30 du côté radialement intérieur 34b de celle-ci, c'est-à-dire la paroi extérieure de la veine 1a de la turbomachine 1. Les plis 36 forment par ailleurs, par leurs replis 36a et 36c orientés radialement et vers l'extérieur, la couche périphérique de la cartouche 30 sur les côtés amont 34a et aval 34c, c'est-à-dire forment la face amont et la face aval de la cartouche 30. Les plis 37, 38 et 39 sont pris en sandwich radialement entre les plis 36 et le cœur en NIDA 31. Radialement et de l'intérieur vers l'extérieur de la cartouche 30, les plis 36 à 39 et le cœur 31 sont superposés de la manière suivante : les parties médianes 36b des plis 36 en Kevlar^{®}, les plis 37, 38 et 39 en fibres de carbone, et le cœur en NIDA 31. Les plis 37 de la deuxième épaisseur, plus courts que les plis 36 de la première épaisseur, s'étendent ici exclusivement longitudinalement, radialement intérieurement au cœur en NIDA 31 et aux couches de densification 33. Les troisième et quatrième épaisseurs de plis 38 et 39, plus courts que les plis 37 et s'étendant le long du cœur en NIDA 31 sur une longueur inférieure à la longueur axiale du cœur 31, sont interposés entre les plis 37 d'une part, et le cœur 31 et la couche de densification aval 33 d'autre part. Les plis 38 et 39 forment une zone de renfort 30b en partie aval 30a. Enfin, les plis 39 sont ici de longueur axiale inférieure aux plis 38, et forment chacun une surépaisseur locale 30b" et 30b' respective (figure 5).

Dans le mode de réalisation illustré en figure 5, les plis 36 sont en tissu de Kevlar^{®}. Les plis 36 sont ici au nombre de trois mais un, deux, quatre, cinq plis ou plus peuvent être prévus. Le Kevlar^{®} a l'avantage de présenter une résistance à l'impact améliorée par rapport aux fibres de carbone. Les tissus de fibres de carbone 37 à 39 disposées à l'intérieur (c'est-à-dire au sein de la cartouche support abradable 30) sont ainsi protégées des impacts, ce qui limite, voire supprime, les risques de dégâts nécessitant un remplacement de la cartouche support abradable 30 au cours de la durée de vie de la turbomachine 1. En outre, le Kevlar^{®} est un matériau moins dense que la fibre de carbone. A nombre de plis identiques, remplacer des plis en fibres de carbone par des plis en Kevlar^{®} permet ainsi d'alléger la cartouche support abradable 30 par rapport à l'art antérieur.

Les plis 37 à 39 sont quant à eux en fibres de carbone. Il convient d'en conserver un certain nombre afin de garantir la tenue modale du carter 3 (sa résistance aux sollicitations vibratoires). De préférence, les plis 37 sont au nombre de trois à cinq. De préférence, les plis 38 sont au nombre de trois à six (six dans le mode de réalisation illustré en figure 5, par exemple). De préférence, les plis 39 sont au nombre de trois à cinq.

Des deuxième, troisième et quatrième modes de réalisation alternatifs au premier mode de réalisation sont décrits ci-après, en référence respective aux figures 6, 7 et 8, sans toutefois que ceux-ci ne soient limitatifs de l'invention. Dans ceux-ci, les éléments identiques portent les mêmes références et ne sont pas repris dans la description qui suit.

Par rapport au premier mode de réalisation, dans un deuxième mode de réalisation de cartouche support abradable 40 illustré en figure 6, un revêtement renforcé 42 comportant un renfort en texture fibreuse 42" qui comprend des plis en fibres de verre 46 est prévu. Les plis 46 remplacent ici les plis en Kevlar^{®} 36 du revêtement 32. Le revêtement renforcé 42 comporte par ailleurs des plis 37, 38 et 39, ici identiques en composition et en disposition à ceux du revêtement 32.

Les plis 46 sont ici au nombre de trois mais un, deux, quatre, cinq plis ou plus peuvent être prévus. Les fibres de verre ont l'avantage de présenter une résistance à l'impact améliorée par rapport aux fibres de carbone. Les tissus de fibres de carbone 37, 38 et 39 disposées à l'intérieur (c'est-à-dire au sein de la cartouche support abradable 40) sont ainsi protégées des impacts, ce qui limite, voire supprime, les risques de dégâts nécessitant un remplacement de la cartouche support abradable 40.

Les plis 38 et 39 forment ici une zone de renfort 30b en partie aval 30a. Enfin, les plis 39 sont ici de longueur axiale inférieure aux plis 38, et forment chacun une surépaisseur locale 30b" et 30b' respective.

Comme il est visible en figure 6 à titre d'exemple, l'amélioration de la résistance à l'impact de la couche support abradable 40 permet le cas échéant de supprimer des plis en fibres de carbone, tel que les plis 39. Dans un tel cas, le cœur en NIDA 31 peut être épaissi en remplacement des plis en fibres de carbone 39 supprimés.

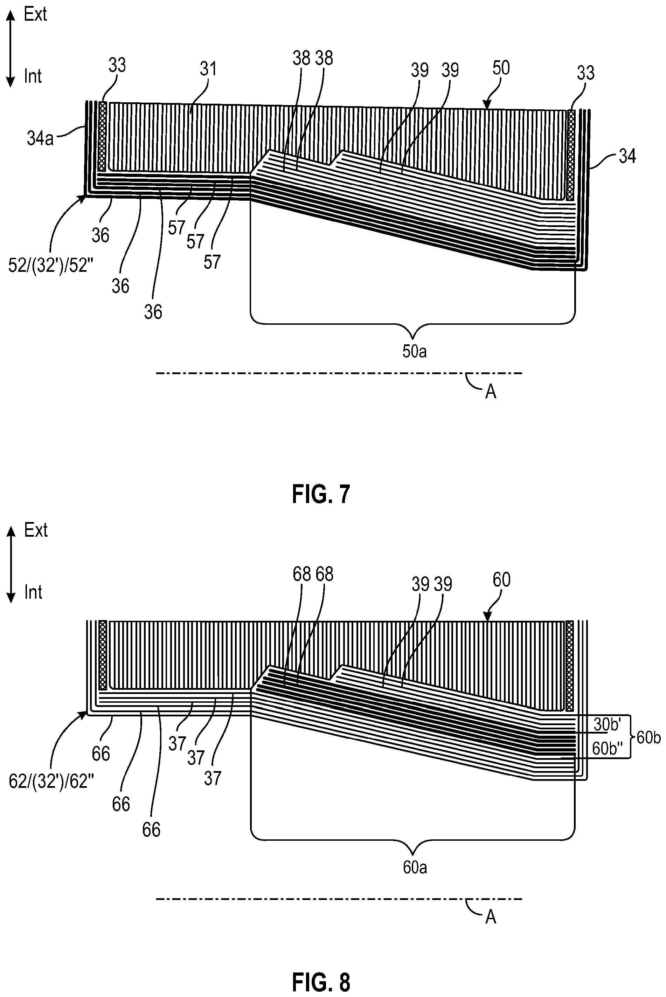

Par rapport au premier mode de réalisation, dans un troisième mode de réalisation de cartouche support abradable 50 illustré en figure 7, un revêtement renforcé 52 comportant un renfort en texture fibreuse 52" qui comprend des plis 57 en tissu hybride Kevlar^{®}-carbone est prévu. Les plis 57 remplacent ici les plis en fibres de carbone 37 du revêtement 32. Le revêtement renforcé 52 comporte par ailleurs des plis 36, 38 et 39, ici identiques en composition et en disposition à ceux du revêtement 32.

De préférence, mais non limitativement, la proportion entre Kevlar^{®}-carbone dans les plis 57 est choisie équilibrée. Un ratio approprié peut alors être choisi parmi un ratio volumique, un ratio massique, ou encore un ratio en nombre de fibres. Par exemple, les plis 57 présentent un ratio en nombre de fibres de Kevlar^{®} par rapport au nombre de fibres de carbone compris entre 40/60 et 60/40 (c'est-à-dire que la proportion des fibres de Kevlar^{®} par rapport au nombre total de fibres est comprise entre 40 et 60% et que respectivement, la proportion des fibres de carbone est de 60 à 40%). De préférence encore, ce ratio est compris entre 45/55 et 55/45. De manière très préférentielle, ce ratio est de 50/50. Par analogie, le ratio choisi peut porter sur la relation volumique entre le Kevlar^{®} et le carbone, ou encore sur la relation massique entre le Kevlar^{®} et le carbone, sur la base de mêmes ratios numériques.

Ce mode de réalisation à plis hybrides 57 permet une transition plus souple, c'est-à-dire plus progressive, entre les propriétés des plis 36 en Kevlar^{®} et les plis 38 et 39 en fibres de carbone. Ce mode de réalisation offre également une partie aval 50a renforcée (figure 7). Une excellente cohérence mécanique et chimique est ainsi obtenue. Dans un exemple avantageux de plis 57, non limitatif et non illustré en détail, les fils de chaîne sont en carbone tandis que les fils de trame sont en Kevlar^{®}. Un tel exemple de configuration des plis 57 permet un tissage simple tout en permettant une transition progressive entre les plis 36 et 38, c'est-à-dire en limitant les problèmes mécaniques aux interfaces entre les plis successifs de différents types.

Les plis 36 en Kevlar^{®} sont ici au nombre de trois mais un, deux, quatre, cinq plis ou plus peuvent être prévus. Les plis 57 en toile hybride Kevlar^{®}-carbone sont ici au nombre de trois mais un, deux, quatre, cinq plis ou plus peuvent être prévus.

Par rapport au premier mode de réalisation, dans un quatrième mode de réalisation de cartouche support abradable 60 illustré en figure 8, un revêtement renforcé 62 comportant un renfort en texture fibreuse 62" qui comprend d'une part une épaisseur de plis 68 en fibres de verre ou en Kevlar^{®} et d'autre part des plis en fibres de carbone 66, est prévu. Les plis 68 remplacent les plis en fibres de carbone 38 du revêtement 32. Les plis 66 remplacent les plis en Kevlar^{®} 36. L'épaisseur de plis 68 en fibres de verre ou en Kevlar^{®} est donc prise en sandwich entre deux épaisseurs de plis 37 et 39 en fibres de carbone. Radialement et de l'intérieur vers l'extérieur de la cartouche 60, les plis 36 à 39 et le cœur 31 sont superposés de la manière suivante, en partie aval 60a de la cartouche 60 : les parties médianes 36b des plis 36 et 37 en fibres de carbone, les plis 68 en fibres de verre ou en Kevlar^{®}, les plis en fibres de carbone 39, et le cœur en NIDA 31.

Les plis 68 en fibres de verre ou en Kevlar^{®} sont ici au nombre de six mais un, deux, trois, quatre, cinq ou plus de six plis peuvent être prévus.

Cette alternative permet également d'améliorer la résistance à l'impact de la cartouche support abradable 60, notamment en une zone de renfort 60b en partie aval 60a de la cartouche support abradable 60, par rapport à l'art antérieur. La zone de renfort comprend alors une surépaisseur 30b' (telle que précitée) et une surépaisseur 60b" formée des plis 68

Dans les premier à troisième modes de réalisation, les revêtements renforcés sont disposés en surface, protégeant ainsi de manière optimale les plis en fibres de carbone 38, 39, et le cas échéant les plis 37.

L'invention apporte des avantages à plusieurs niveaux. D'un point de vue technique :
- le Kevlar^{®} utilisé comme renfort présente une résistance à l'impact améliorée (impacts de glace et/ou d'aubes de rotor) et permet un gain de masse du fait d'une densité moindre que les fibres de carbone ;
- les fibres de verre utilisées comme renfort présentent une résistance à l'impact améliorée (impacts de glace et/ou d'aubes de rotor).

D'un point de vue industriel :
- grâce à une résistance à l'impact plus élevée, les cartouches support abradable selon l'invention peuvent jouir d'une durée de service étendue. Il n'y a donc plus besoin de remplacer la cartouche support abradable dans un carter de turbomachine, tel qu'un carter de soufflante, en cas d'impact de glace ;
- l'amélioration de la résistance à l'impact permet le cas échéant de supprimer des plis en fibres de carbone (par exemple en épaississant le matériau en NIDA en remplacement des plis en fibres de carbone supprimés). Dans un tel cas, l'invention permet d'économiser sur les coûts de matériau et de raccourcir le temps de cycle lors de la fabrication.

L'invention apporte donc des gains significatifs à la fois sur les plans technique et industriel.

## Revendications

1. Carter de turbomachine d'aéronef, comportant une enveloppe annulaire (9) s'étendant autour d'un axe A et présentant une surface annulaire interne (9'), le carter comportant également une cartouche support abradable annulaire (30, 40, 50, 60) qui est fixée contre ladite surface annulaire interne (9'), la cartouche support abradable (30, 40, 50, 60) présente un revêtement renforcé (32, 42, 52, 62) comportant un renfort en texture fibreuse (32", 42", 52", 62") noyé dans une matrice en résine (32'), le renfort en texture fibreuse (32", 42", 52", 62") comportant une superposition de plis en texture fibreuse (36, 37, 38, 39 ; 46 ; 57 ; 66, 68),
**caractérisé en ce que** la superposition de plis (36, 37, 38, 39 ; 46 ; 57 ; 66, 68) comporte au moins un pli en Kevlar^{®} (36 ; 68) ou en fibres de verre (46 ; 68) et **en ce que** des plis ( 38,39 ;68) de ladite superposition de plis en texture fibreuse forment une zone de renfort (30b ;60b) en une partie aval (30a ;50a ;60a) de la cartouche support abradable (30,40,50,60).

2. Carter de turbomachine d'aéronef selon la revendication précédente, dans lequel lesdits plis ( 38,39 ;68) de la zone de renfort (30b ;60b) forment une surépaisseur locale.

3. Carter de turbomachine d'aéronef selon l'une des revendications précédentes, dans lequel l'au moins un pli en Kevlar^{®} (36 ; 68) ou en fibres de verre (46 ; 68) s'étend sur plus de la moitié de la longueur axiale de la cartouche support abradable (30, 40, 50, 60).

4. Carter de turbomachine d'aéronef selon l'une des revendications précédentes, dans lequel l'au moins un pli en Kevlar^{®} (36 ; 68) ou en fibres de verre (46 ; 68) forme un revêtement radialement intérieur de la cartouche support abradable (30, 40, 50, 60).

5. Carter de turbomachine d'aéronef selon l'une des revendications précédentes, dans lequel l'au moins un pli en Kevlar^{®} (36 ; 68) ou en fibres de verre (46 ; 68) est configuré pour former une paroi extérieure d'une veine (1a) de la turbomachine (1).

6. Carter de turbomachine d'aéronef selon l'une des revendications précédentes, dans lequel l'au moins un pli en Kevlar^{®} (36 ; 68) ou en fibres de verre (46 ; 68) forme également une couche périphérique sur le côté amont (34a) et/ou le côté aval (34c) de la cartouche support abradable (30, 40, 50, 60).

7. Carter de turbomachine d'aéronef selon l'une des revendications précédentes, dans lequel l'au moins un pli en Kevlar^{®} (36 ; 68) ou en fibres de verre (46 ; 68) est une toile tissée de Kevlar^{®} (36).

8. Carter de turbomachine d'aéronef selon la revendication précédente, dans lequel ladite toile tissée de Kevlar^{®} (36) est pré-imprégnée de résine.

9. Carter de turbomachine d'aéronef selon l'une quelconque des revendications 7 et 8, dans lequel une épaisseur de toile tissée mixte Kevlar^{®}-fibres de carbone (57) est superposée radialement extérieurement à ladite toile de Kevlar^{®} (36).

10. Carter de turbomachine d'aéronef selon l'une des revendications 1 à 6, dans lequel l'au moins un pli en Kevlar^{®} (36 ; 68) ou en fibres de verre (46 ; 68) est en fibres de verre (46), et dans lequel une épaisseur de plis en fibres de carbone (37, 38, 39) est superposée radialement extérieurement audit pli en fibres de verre (46).

11. Carter de turbomachine d'aéronef selon l'une quelconque des revendications précédentes, l'au moins un pli en Kevlar^{®} (36 ; 68) ou en fibres de verre (46 ; 68) est pris en sandwich entre deux épaisseurs de plis en fibres de carbone (37, 39).

12. Carter de turbomachine d'aéronef selon l'une des revendications précédentes, dans lequel la cartouche support abradable (30, 40, 50, 60) comporte un cœur à structure en nid d'abeilles (31).

13. Carter de turbomachine d'aéronef selon la revendication précédente, une face (34d) du cœur (31) est exempte de l'au moins un pli en Kevlar^{®} (36 ; 68) ou en fibres de verre (46 ; 68).

14. Turbomachine d'aéronef comportant un carter selon l'une des revendications précédentes.

## Patentansprüche

1. Turbomaschinengehäuse eines Luftfahrzeugs, das eine ringförmige Hülle (9) umfasst, die sich um eine Achse A erstreckt und eine ringförmige Innenoberfläche (9') aufweist, wobei das Gehäuse auch eine ringförmige verschleißbare Trägerkartusche (30, 40, 50, 60) umfasst, die an der ringförmigen Innenoberfläche (9') befestigt ist, die verschleißbare Trägerkartusche (30, 40, 50, 60) eine verstärkte Beschichtung (32, 42, 52, 62) aufweist, die eine Verstärkung aus Fasertextur (32", 42", 52", 62") umfasst, die in eine Harzmatrix (32') eingebettet ist, wobei die Verstärkung aus Fasertextur (32", 42", 52", 62") eine Überlagerung von Lagen aus Fasertextur (36, 37, 38, 39; 46; 57; 66, 68) umfasst,
**dadurch gekennzeichnet, dass** die Überlagerung von Lagen (36, 37, 38, 39; 46; 57; 66, 68) mindestens eine Lage aus Kevlar^{®} (36; 68) oder aus Glasfasern (46; 68) umfasst und dass Lagen ( 38, 39; 68) der Überlagerung von Lagen aus Fasertextur eine Verstärkungszone (30b; 60b) an einem stromabwärtigen Teil (30a; 50a; 60a) der verschleißbaren Trägerkartusche (30, 40, 50, 60) bilden.

2. Turbomaschinengehäuse eines Luftfahrzeugs nach dem vorstehenden Anspruch, wobei die Lagen (38, 39; 68) der Verstärkungszone (30b; 60b) eine lokale Verdickung bilden.

3. Turbomaschinengehäuse eines Luftfahrzeugs nach einem der vorstehenden Ansprüche, wobei sich die mindestens eine Lage aus Kevlar^{®} (36; 68) oder aus Glasfasern (46; 68) über mehr als die Hälfte der axialen Länge der verschleißbaren Trägerkartusche (30, 40, 50, 60) erstreckt.

4. Turbomaschinengehäuse eines Luftfahrzeugs nach einem der vorstehenden Ansprüche, wobei die mindestens eine Lage aus Kevlar^{®} (36; 68) oder aus Glasfasern (46; 68) eine radial innere Beschichtung der verschleißbaren Trägerkartusche (30, 40, 50, 60) bildet.

5. Turbomaschinengehäuse eines Luftfahrzeugs nach einem der vorstehenden Ansprüche, wobei die mindestens eine Lage aus Kevlar^{®} (36; 68) oder aus Glasfasern (46; 68) konfiguriert ist, um eine Außenwand einer Ader (1a) der Turbomaschine (1) zu bilden.

6. Turbomaschinengehäuse eines Luftfahrzeugs nach einem der vorstehenden Ansprüche, wobei die mindestens eine Lage aus Kevlar^{®} (36; 68) oder aus Glasfasern (46; 68) auch eine Umfangsschicht auf der stromaufwärtigen Seite (34a) und/oder der stromabwärtigen Seite (34c) der verschleißbaren Trägerkartusche (30, 40, 50, 60) bildet.

7. Turbomaschinengehäuse eines Luftfahrzeuges nach einem der vorstehenden Ansprüche, wobei die mindestens eine Lage aus Kevlar^{®} (36; 68) oder aus Glasfaser (46; 68) ein gewebtes Tuch aus Kevlar^{®} (36) ist.

8. Turbomaschinengehäuse eines Luftfahrzeugs nach dem vorstehenden Anspruch, wobei das gewebte Tuch aus Kevlar^{®} (36) mit Harz vorimprägniert ist.

9. Turbomaschinengehäuse eines Luftfahrzeugs nach einem der Ansprüche 7 oder 8, wobei eine Dicke eines aus Kevlar^{®}/Kohlenstofffaser-Mischgewebetuchs (57) radial außen über das Tuch aus Kevlar^{®} (36) gelegt ist.

10. Turbomaschinengehäuse eines Luftfahrzeugs nach einem der Ansprüche 1 bis 6, wobei die mindestens eine Lage aus Kevlar^{®} (36; 68) oder aus Glasfasern (46; 68) aus Glasfasern (46) besteht, und wobei eine Dicke von Lagen aus Kohlenstofffasern (37, 38, 39) radial außen über die Lage aus Glasfasern (46) gelegt ist.

11. Turbomaschinengehäuse eines Luftfahrzeugs nach einem der vorstehenden Ansprüche, wobei die mindestens eine Lage aus Kevlar^{®} (36; 68) oder aus Glasfasern (46; 68) zwischen zwei Lagedicken aus Kohlenstofffasern (37, 39) sandwichartig aufgenommen ist.

12. Turbomaschinengehäuse eines Luftfahrzeugs nach einem der vorstehenden Ansprüche, wobei die verschleißbare Trägerkartusche (30, 40, 50, 60) einen Kern mit Wabenstruktur (31) aufweist.

13. Turbomaschinengehäuse eines Luftfahrzeugs nach dem vorstehenden Anspruch, wobei eine Seite (34d) des Kerns (31) frei von der mindestens einen Lage aus Kevlar^{®} (36; 68) oder aus Glasfasern (46; 68) ist.

14. Turbomaschine eines Luftfahrzeugs, die ein Gehäuse nach einem der vorstehenden Ansprüche umfasst.

## Claims

1. An aircraft turbomachine housing, comprising an annular casing (9) extending about an axis A and having an internal annular surface (9'), the housing also comprising an annular abradable support cartridge (30, 40, 50, 60) which is attached against said internal annular surface (9'), the abradable support cartridge (30, 40, 50, 60) has a reinforced coating (32, 42, 52, 62) comprising a fibrous texture reinforcement (32", 42", 52", 62") embedded in a resin matrix (32'), the fibrous texture reinforcement (32", 42", 52", 62") comprising a stack of fibrous texture plies (36, 37, 38, 39; 46; 57; 66, 68),
**characterised in that** the stack of plies (36, 37, 38, 39; 46; 57; 66, 68) comprises at least one ply made of Kevlar^{®} (36; 68) or of glass fibres (46; 68) and **in that** plies (38, 39; 68) of said stack of plies of fibrous texture form a reinforcement area (30b; 60b) at a downstream portion (30a; 50a; 60a) of the abradable support cartridge (30, 40, 50, 60).

2. The aircraft turbomachine housing according to the preceding claim, wherein said plies (38, 39; 68) of the reinforcement area (30b; 60b) form a local allowance.

3. The aircraft turbomachine housing according to any of the preceding claims, wherein the at least one Kevlar^{®} (36; 68) or glass fibre (46; 68) ply extends over more than half the axial length of the abradable support cartridge (30, 40, 50, 60).

4. The aircraft turbomachine housing according to any of the preceding claims, wherein the at least one Kevlar^{®} (36; 68) or glass fibre (46; 68) ply forms a radially inner coating of the abradable support cartridge (30, 40, 50, 60).

5. The aircraft turbomachine housing according to any of the preceding claims, wherein the at least one Kevlar^{®} (36; 68) or glass fibre (46; 68) ply is configured to form an outer wall of a duct (1a) of the turbomachine (1).

6. The aircraft turbomachine housing according to any of the preceding claims, wherein the at least one Kevlar^{®} (36; 68) or glass fibre (46; 68) ply also forms a peripheral layer on the upstream side (34a) and/or the downstream side (34c) of the abradable support cartridge (30, 40, 50, 60).

7. The aircraft turbomachine housing according to any of the preceding claims, wherein the at least one Kevlar^{®} (36; 68) or glass fibre (46; 68) ply is a woven Kevlar^{®} fabric (36).

8. The aircraft turbomachine housing according to the preceding claim, wherein said woven Kevlar^{®} fabric (36) is pre-impregnated with resin.

9. The aircraft turbomachine housing according to any one of claims 7 and 8, wherein a thickness of mixed Kevlar^{®}-carbon fibre woven fabric (57) is stacked radially outwardly on said Kevlar^{®} fabric (36).

10. The aircraft turbomachine housing according to any of claims 1 to 6, wherein the at least one Kevlar^{®} (36; 68) or glass fibre (46; 68) ply is made of glass fibre (46), and wherein a thickness of carbon fibre plies (37, 38, 39) is stacked radially outwardly on said glass fibre ply (46).

11. The aircraft turbomachine housing according to any one of the preceding claims, the at least one Kevlar^{®} (36; 68) or glass fibre (46; 68) ply is sandwiched between two thicknesses of carbon fibre plies (37, 39).

12. The aircraft turbomachine housing according to any of the preceding claims, wherein the abradable support cartridge (30, 40, 50, 60) comprises a honeycomb core (31).

13. The aircraft turbomachine housing according to the preceding claim, a face (34d) of the core (31) is free of the at least one Kevlar^{®} (36; 68) or glass fibre (46; 68) ply.

14. An aircraft turbomachine comprising a housing according to one of the preceding claims.
